# EUROPEAN PATENT APPLICATION

(11) **EP 4 571 299 A1**
(43) Date of publication of application: **18.06.2025**
(21) Application number: 24219563.4
(22) Date of filing: 12.12.2024
(51) Int. Cl.: G01N 23/04, G01N 23/18

(54) **MULTI-ROTATIONAL FIXTURES FOR RADIOGRAPHY SYSTEMS AND RADIOGRAPHY SYSTEMS INCLUDING MULTI-ROTATIONAL FIXTURES**

(30) Priority: 14.12.2023 US 202363610264 P; 06.12.2024 US 202418972126
(71) Applicant: Illinois Tool Works Inc., Glenview IL 60025 (US)
(72) Inventor: WILSON, Nicole, Glenview, 60025 (US); JOHNSON, Matthew, Glenview, 60025 (US); MUEHLHAUSER, Brett, Glenview, 60025 (US); KAETER, Cole, Glenview, 60025 (US); JAYAKODY, Dakshina, Glenview, 60025 (US); MICHAEL, Blaine, Glenview, 60025 (US)
(74) Representative: HGF

(57) **Abstract**

Disclosed example multi-rotational fixtures for radiography systems include: a plurality of fixture assemblies, each of the fixture assemblies configured to hold a plurality of objects for inspection in a radiography system; a driving rotation stage; one or more driven rotation stages coupled to the driving rotation stage, such that rotation of the driving rotation stage causes the driven rotation stages to rotate simultaneously, wherein the driving rotation stage and the one or more driven rotation stages supports and simultaneously rotates a corresponding one of the fixture assemblies; and a plurality of follower assemblies configured to support the plurality of fixture assemblies on an opposite end of the fixture assemblies from the driving rotation stage and the driven rotation stages.

## Description

### RELATED APPLICATIONS

The present application claims the benefit of U.S. Provisional Patent Application Serial No. 63/610,264, filed December 14, 2023, entitled "MULTI-ROTATIONAL FIXTURES FOR RADIOGRAPHY SYSTEMS AND RADIOGRAPHY SYSTEMS INCLUDING MULTI-ROTATIONAL FIXTURES." The entirety of U.S. Provisional Patent Application Serial No. 63/610,264 is expressly incorporated herein by reference.

### TECHNICAL FIELD

The present disclosure generally relates to industrial radiography imaging processes and, more particularly, to multi-rotational fixtures for radiography systems and radiography systems including multi-rotational fixtures.

### BACKGROUND

Industrial radiography imaging systems are used to acquire two dimensional (2D) radiographic images, 2D sinograms, and/or three-dimensional (3D) volumetric data of parts used in industrial applications. Such industrial applications might include, for example, aerospace, automotive, electronic, medical, pharmaceutical, military, and/or defense applications. The 2D radiographic images may be evaluated to check the part(s) for cracks, flaws, defects, discontinuities, and/or anomalies that may or may not normally be visible to the human eye, and/or to determine internal and/or external measurements of part(s).

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to systems and methods to configure radiography systems, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIG. 1 shows an example of an industrial X-ray radiography system, in accordance with aspects of this disclosure.
FIG. 2 is a block diagram showing an example X-ray radiography system having the industrial X-ray radiography machine of FIG. 1.
FIG. 3 is a front and top perspective view of the example multi-rotational fixture of FIG. 1.
FIG. 4 is a rear and bottom perspective view of the example multi-rotational fixture of FIG. 1.
FIG. 5 is a front elevation view of the example multi-rotational fixture of FIG. 1.
FIG. 6 illustrates an example fixture assembly that may be used to implement the multi-rotational fixture of FIG. 1.
FIG. 7 is a more detailed view of a bottom end of multiple fixture assemblies coupled to corresponding rotation stages of the multi-rotational fixture of FIG. 1.
FIG. 8 is a cross-sectional elevation view of a top end of multiple fixture assemblies coupled to corresponding follower assemblies of the multi-rotational fixture of FIG. 1.
FIG. 9 is a perspective view of the top end of multiple fixture assemblies coupled to the follower assemblies of FIG. 8.
FIG. 10 is a cross-sectional elevation view of the example rotation stages of the multi-rotational fixture of FIG. 1.
FIG. 11 is a cross-sectional top plan view of the example rotation stages of the multi-rotational fixture of FIG. 1.

The figures are not necessarily to scale. Where appropriate, the same or similar reference numerals are used in the figures to refer to similar or identical elements.

### DETAILED DESCRIPTION

Some conventional industrial radiography systems include a turntable or other staging device to manipulate the object under inspection. However, due to the speed of processes such as 3D computed tomography, the throughput of conventional industrial radiography systems can be lower than desired.

Disclosed example multi-rotational fixtures for radiography systems and radiography systems including multi-rotational fixtures allow for significantly higher throughputs for smaller parts by allowing an industrial radiography system to simultaneously capture scans of multiple parts along multiple parallel axes of rotation, which are rotated simultaneously to allow for simultaneous image capture of an array of objects. In addition to multiple axes of rotation, disclosed example multi-rotational fixtures and radiography systems allow for multiple components to be supported by the fixtures along each of the multiple axes of rotation without introducing physical instability in the positioning of the objects under inspection.

Disclosed example multi-rotational fixtures for radiography systems include: a plurality of fixture assemblies, each of the fixture assemblies configured to hold a plurality of objects for inspection in a radiography system; a driving rotation stage; one or more driven rotation stages coupled to the driving rotation stage, such that rotation of the driving rotation stage causes the driven rotation stages to rotate simultaneously, wherein the driving rotation stage and the one or more driven rotation stages supports and simultaneously rotates a corresponding one of the fixture assemblies; and a plurality of follower assemblies configured to support the plurality of fixture assemblies on an opposite end of the fixture assemblies from the driving rotation stage and the driven rotation stages.

In some example multi-rotational fixtures, each of the plurality of fixture assemblies is configured to make a toolless connection to a corresponding one of the follower assemblies and a corresponding one of the rotation stages. In some example multi-rotational fixtures, the driving rotation stage is coupled to a driving shaft configured to receive motive power from an external actuator.

In some example multi-rotational fixtures, each of the follower assemblies includes a bearing and a seat coupled to the bearing, in which each of the fixture assemblies is configured to couple to the seat for support by the bearing. In some example multi-rotational fixtures, each of the fixture assemblies includes a tapered connector configured to sit within the seat for support by the ball bearing.

Some example multi-rotational fixtures further include a stage frame, in which the follower assemblies and the rotation stages are coupled to the stage frame. In some example multi-rotational fixtures, each of the fixture assemblies includes: a fixture frame configured to be removably coupled to one of the follower assemblies and one of the rotation stages; and a plurality of supports coupled to the fixture frame and configured to securely hold corresponding ones of the objects under inspection. In some example multi-rotational fixtures, a capacity of the fixture is a product of the number of rotation stages and a number of the plurality of supports on each of the fixture assemblies.

In some example multi-rotational fixtures, each of the follower assemblies has an axis of rotation that aligns with an axis of rotation of a corresponding one of the rotation stages.

Disclosed example radiography systems include: a radiation detector; a radiation emitter configured to direct radiation toward the radiation detector; an object positioner; and a multi-rotational fixture coupled to the object positioner, in which the fixture includes : a plurality of fixture assemblies, each of the fixture assemblies configured to hold a plurality of objects for inspection in a radiography system; a driving rotation stage coupled to the object positioner; one or more driven rotation stages coupled to the driving rotation stage, such that rotation of the driving rotation stage causes the driven rotation stages to rotate simultaneously, wherein the driving rotation stage and the one or more driven rotation stages supports and simultaneously rotates a corresponding one of the fixture assemblies; and a plurality of follower assemblies configured to support the plurality of fixture assemblies on an opposite end of the fixture assemblies from the driving rotation stage and the driven rotation stages.

Some example radiography systems further include control circuitry configured to: control the object positioner to rotate the fixture assemblies to rotate the plurality of objects for inspection; control the radiation emitter to emit the radiation toward the radiation detector; and assemble three-dimensional scans of the plurality of objects based on images captured by respective portions of the radiation detector.

In some example radiography systems, each of the plurality of fixture assemblies is configured to make a toolless connection to a corresponding one of the follower assemblies and a corresponding one of the rotation stages. In some example radiography systems, the driving rotation stage is coupled to a driving shaft configured to receive motive power from an external actuator.

In some example radiography systems, each of the follower assemblies includes a bearing and a seat coupled to the bearing, in which each of the fixture assemblies is configured to couple to the seat for support by the bearing. In some example radiography systems, each of the fixture assemblies includes a tapered connector configured to sit within the seat for support by the ball bearing.

Some example radiography systems further include a stage frame, in which the follower assemblies and the rotation stages are coupled to the stage frame. In some example radiography systems, each of the fixture assemblies includes: a fixture frame configured to be removably coupled to one of the follower assemblies and one of the rotation stages; and a plurality of supports coupled to the fixture frame and configured to securely hold corresponding ones of the objects under inspection. In some example radiography systems, a capacity of the fixture is a product of the number of rotation stages and a number of the plurality of supports on each of the fixture assemblies.

In some example radiography systems, each of the follower assemblies has an axis of rotation that aligns with an axis of rotation of a corresponding one of the rotation stages.

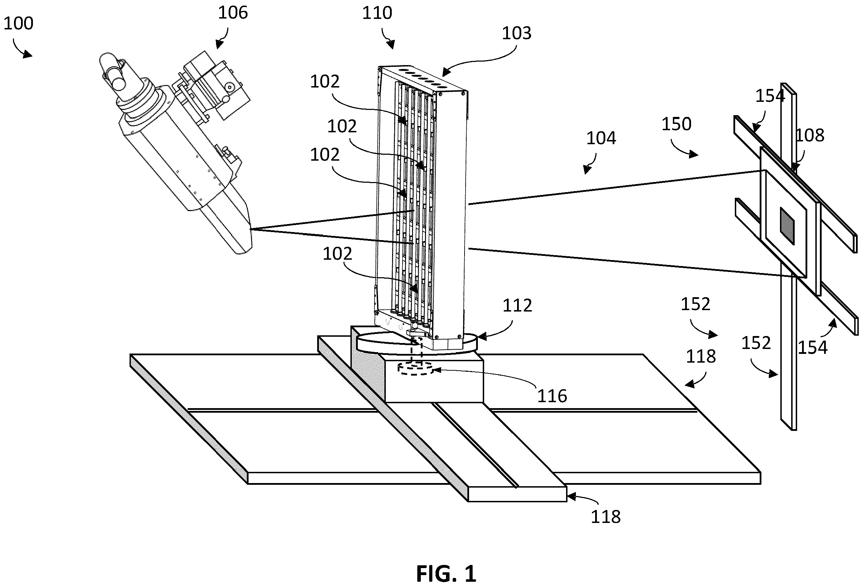

FIG. 1 shows an example industrial X-ray radiography system 100. In some examples, the X-ray radiography system 100 may be used to perform non-destructive testing (NDT), digital radiography (DR) scans, computerized tomography (CT) scans, and/or other applications on a set of objects 102. In some examples, the objects 102 may be an industrial component and/or an assembly of components (e.g., an engine cast, microchip, bolt, etc.). While primarily discussed in terms of X-rays for the sake of simplicity, in some examples, the industrial X-ray radiography system 100 discussed herein may use radiation in other wavelengths (e.g., Gamma, Neutron, Terahertz, etc.). The objects 102 are supported and manipulated in a multi-rotational fixture 103.

In the example of FIG. 1, the X-ray radiography system 100 directs X-ray radiation 104 from an X-ray emitter 106, through the object 102, to an X-ray detector 108. In some examples, the X-ray emitter 106 may comprise an X-ray tube configured to emit cone or fan shaped X-ray radiation. In some examples, the X-ray emitter 106 may emit X-ray radiation within an energy range of 20 kiloelectron volts (keV) to 15 megaelectron volts (MeV).

In some examples, two dimensional (2D) digital images (e.g., radiographic images, X-ray images, etc.) may be generated based on the X-ray radiation 104 incident on the X-ray detector 108. In some examples, the 2D images may be generated by the X-ray detector 108 itself. In some examples, the 2D images may be generated by the X-ray detector 108 in combination with a computing system in communication with the X-ray detector 108.

In some examples, the 2D images may be constantly captured/acquired by the X-ray detector 108 (e.g., in a free run mode) at a given frame rate, as long as the X-ray detector 108 is powered. However, in some examples, the 2D images may only be fully generated by the X-ray detector 108 (and/or associated computing system(s)) when a scanning/imaging process has been selected and/or is running. Likewise, in some examples, the 2D images may only be saved in permanent (i.e., non-volatile) memory when a scanning/imaging process has been selected and/or is running.

In some examples, the 2D images generated by the X-ray detector 108 (and/or associated computing system(s)) may be combined to form three dimensional (3D) volumes and/or images. In some examples, 2D image slices of the 3D volumes/images may also be formed. While the term "image" is used herein as a shorthand, it should be understood that an "image" may comprise representative data until that data is visually rendered by one or more appropriate components (e.g., a display screen, a graphic processing unit, an X-ray detector 108, etc.).

In some examples, the X-ray detector 108 may comprise a flat panel detector (FDA), a linear diode array (LDA), and/or a lens-coupled scintillation detector. In some examples, the X-ray detector 108 may comprise a fluoroscopy detection system and/or a digital image sensor configured to receive an image indirectly via scintillation. In some examples, the X-ray detector 108 may be implemented using a sensor panel (e.g., a charge coupled device (CCD) panel, a complementary metal-oxide-semiconductor (CMOS) panel, etc.) configured to receive the X-rays directly, and to generate the digital images. In some examples, the X-ray detector 108 may include a scintillation layer/screen that absorbs X-rays and emits visible light photons that are, in turn, detected by a solid-state detector panel (e.g., a CMOS X-ray panel and/or CCD X-ray panel) coupled to the scintillation screen.

In some examples, the X-ray detector 108 (e.g., the solid state detector panel) may include pixels. In some examples, the pixels may correspond to portions of a scintillation screen. In some examples, the size of each pixel may range from tens to hundreds of micrometers. In some examples, the pixel size of the X-ray detector 108 may be in the range of 25 micrometers to 250 micrometers (e.g., 200 micrometers). The pixel pitch refers to the distance from center-to-center of adjacent pixels. Pixel pitch may be the same or different along different directions or axes of the X-ray detector 108.

In some examples, the 2D image captured by the X-ray detector 108 (and/or associated computing system) may contain features finer (e.g., smaller, denser, etc.) than the pixel size of the X-ray detector 108. For example, a computer microchip may have very fine features that are smaller than a pixel. In such examples, it may be useful to use sub-pixel sampling to achieve a higher, more detailed, resolution than might otherwise be possible.

In the example of FIG. 1, the radiography system 100 includes a detector positioner 150 configured to move the X-ray detector 108 to different detector positions (e.g., for sub-pixel sampling). As shown, the detector positioner 150 includes one or more vertical pillars 152 and horizontal rails 154. As shown the X-ray detector 108 is retained on the rails 154. In some examples, the X-ray detector 108 may be retained on (and/or attached to) the rails 154 by one or more intermediary supports.

As the X-ray detector 108 may be moved by the detector positioner 150, in some examples, the objects 102 may be moved by an object positioner 110. In the example of FIG. 1, the object positioner 110 retains the object 102 in the path of the X-ray radiation 104, between the X-ray emitter 106 and detector 108. In some examples, the object positioner 110 may be configured to move the objects 102 towards and/or away from the X-ray emitter 106 and/or X-ray detector 108, thereby changing the geometric magnification (defined as the distance between the X-ray emitter 106 and the X-ray detector 108 divided by the distance between the X-ray emitter 106 and the object 102).

In the example of FIG. 1, the object positioner 110 includes the multi-rotational fixture 103 upon which the objects 102 are positioned. As shown, the multi-rotational fixture 103 is attached to a motorized spindle 116, through the multi-rotational fixture 103 is actuated to rotate the objects about multiple rotational axes, as disclosed in more detail below. The multi-rotational fixture 103 may be replaced in the radiography system 100 to manipulate other types of objects (e.g., individual objects) for scanning. In some examples, one or more alternative and/or additional rotation mechanisms may be provided.

In the example of FIG. 1, the rotatable fixture 112 is supported by a support structure 118. In some examples, the support structure 118 may be configured to translate the rotatable fixture 112 (and/or the object 102) toward and/or away from the X-ray emitter 106 and/or the X-ray detector 108. Additionally the support structure 118 may be configured to translate the rotatable fixture 112 (and/or the object 102) horizontally or vertically in relationship to the emitter 106 and the detector 108. In some examples, the support structure 118 may include one or more actuators configured to impart the translation(s). In some other examples, the X-ray emitter 106 and/or the X-ray detector 108 may be moved with respect to a stationary or moveable fixture and the support structure 118. For example, the X-ray emitter 106 and/or the X-ray detector 108 may be moved toward and/or away from the fixture, upwards and/or downwards with respect to the fixture, rotated around the fixture, and/or otherwise moved and/or reoriented while the fixture remains stationary or is moved and/or reoriented.

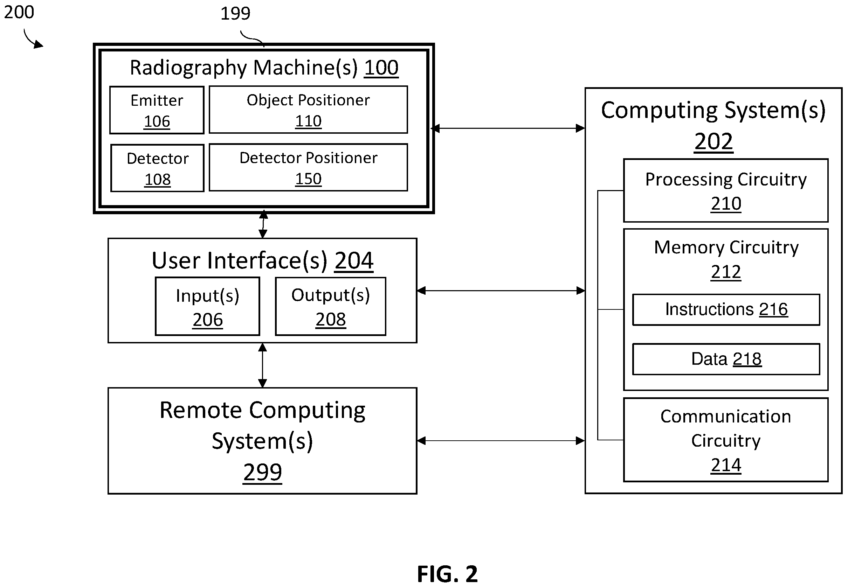

FIG. 2 shows an example of an X-ray radiography system 200 that includes an X-ray radiography system 100, such as, for example, the X-ray radiography system 100 shown in FIG. 1. As shown, the X-ray radiography system 200 also includes a computing system 202, a user interface (UI) 204, and a remote computing system 299. While only one X-ray radiography system 100, computing system 202, UI 204, and remote computing system 299 are shown in the example of FIG. 2, in some examples the X-ray radiography system 200 may include several X-ray radiography systems 100, computing systems 202, UIs 204, and/or remote computing systems 299.

In the example of FIG. 2, the X-ray radiography system 100 has an emitter 106, detector 108, detector positioner 150, and object positioner 110 enclosed within a housing 199. As shown, the X-ray radiography system 100 is connected to and/or in communication with the computing system(s) 202 and UI(s) 204. In some examples, the X-ray radiography system 100 may also be in electrical communication with the remote computing system(s) 299. In some examples, the communications and/or connections may be electrical, electromagnetic, wired, and/or wireless.

In the example of FIG. 2, the UI 204 includes one or more input devices 206 and/or output devices 208. In some examples, the one or more input devices 206 may comprise one or more touch screens, mice, keyboards, buttons, switches, slides, knobs, microphones, dials, and/or other electromechanical input devices. In some examples, the one or more output devices 208 may comprise one or more display screens, speakers, lights, haptic devices, and/or other devices. In some examples, a user may provide input to, and/or receive output from, the X-ray radiography machine(s) 100, computing system(s) 202, and/or remote computing system(s) 299 via the UI(s) 204.

In some examples, the UI(s) 204 may be part of the computing system 202. In some examples, the computing system 202 may implement one or more controllers of the X-ray radiography machine(s) 100. In some examples, the computing system 202 together with the UI(s) 204 may comprise an image acquisition system of the X-ray radiography system 200. In some examples, the remote computing system(s) 299 may be similar or identical to the computing system 202.

In the example of FIG. 2, the computing system 202 is in (e.g., electrical) communication with the X-ray radiography machine(s) 100, UI(s) 204, and remote computing system(s) 299. In some examples, the communication may be direct communication (e.g., through a wired and/or wireless medium) or indirect communication, such as, for example, through one or more wired and/or wireless networks (e.g., local and/or wide area networks). As shown, the computing system 202 includes processing circuitry 210, memory circuitry 212, and communication circuitry 214 interconnected with one another via a common electrical bus.

In some examples, the processing circuitry 210 may comprise one or more processors. In some examples, the communication circuitry 214 may include one or more wireless adapters, wireless cards, cable adapters, wire adapters, radio frequency (RF) devices, wireless communication devices, Bluetooth devices, IEEE 802.11-compliant devices, WiFi devices, cellular devices, GPS devices, Ethernet ports, network ports, lightning cable ports, cable ports, etc. In some examples, the communication circuitry 214 may be configured to facilitate communication via one or more wired media and/or protocols (e.g., Ethernet cable(s), universal serial bus cable(s), etc.) and/or wireless mediums and/or protocols (e.g., near field communication (NFC), ultra high frequency radio waves (commonly known as Bluetooth), IEEE 802.1 1x, Zigbee, HART, LTE, Z-Wave, WirelessHD, WiGig, etc.).

In the example of FIG. 1, the multi-rotational fixture 103 is coupled to the motorized spindle to rotate the objects 102 about multiple axes.

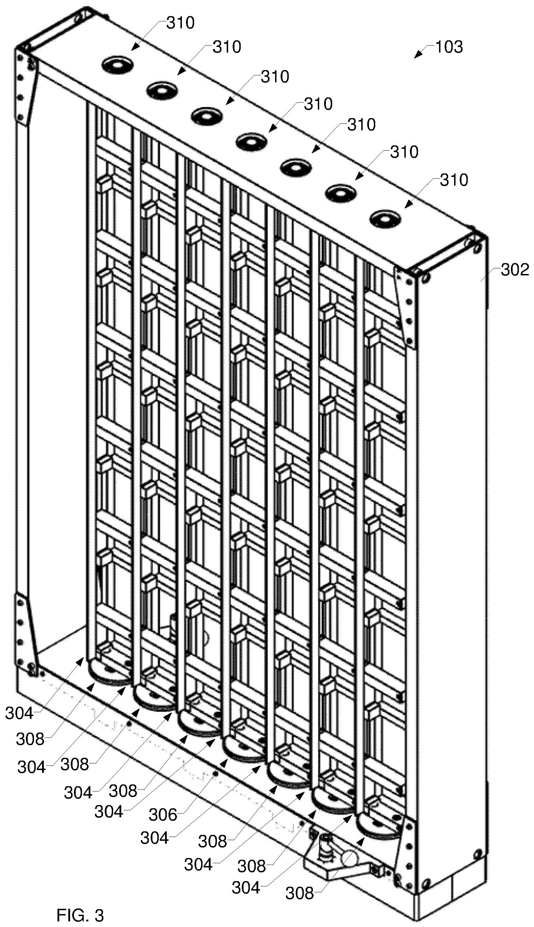

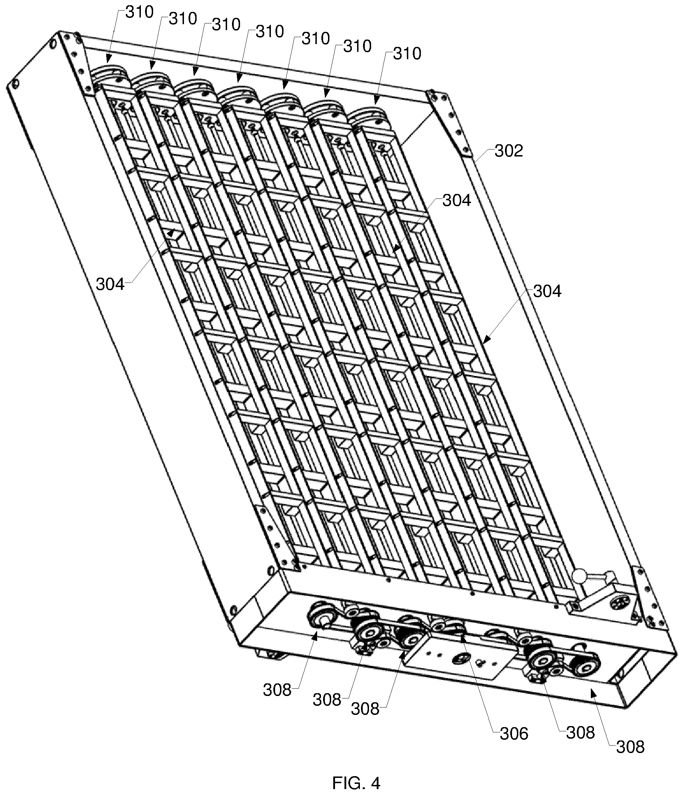

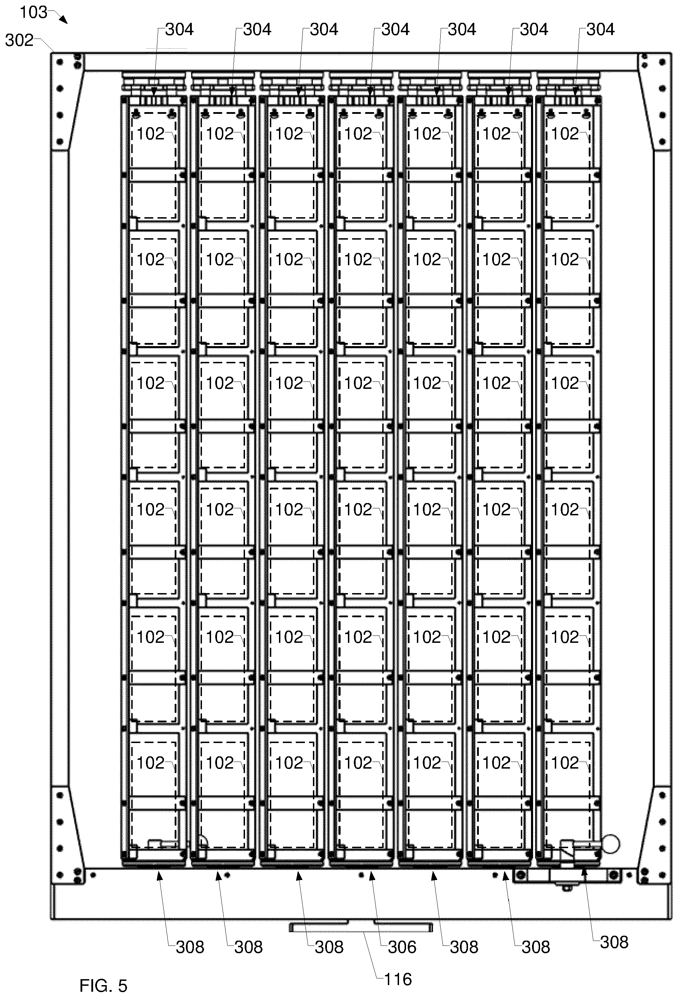

FIG. 3 is a front and top perspective view of the example multi-rotational fixture 103 of FIG. 1. FIG. 4 is a rear and bottom perspective view of the example multi-rotational fixture of FIG. 1. FIG. 5 is a front elevation view of the example multi-rotational fixture of FIG. 1. The example multi-rotational fixture 103 includes a stage frame 302, multiple fixture assemblies 304, a driving rotation stage 306, driven rotation stages 308, and multiple follower assemblies 310.

The stage frame 302 provides a rigid structural support for the rotation stages 306, 308 and the follower assemblies 310.

The fixture assemblies 304 are configured to hold multiple objects for inspection. In the example of FIG. 3, the fixture assemblies 304 hold the objects in a vertical arrangement. In some examples, the fixture assemblies 304 may be arranged to hold the objects in substantial alignment with an axis of rotation of a corresponding one of the rotation stages 306, 308. However, in other examples, the multi-rotational fixture may be arranged to hold the fixture assemblies 304 in a horizontal arrangement (e.g., the rotation stages 306, 308 and the multiple follower assemblies 310 also being configured to hold the fixture assemblies horizontally).

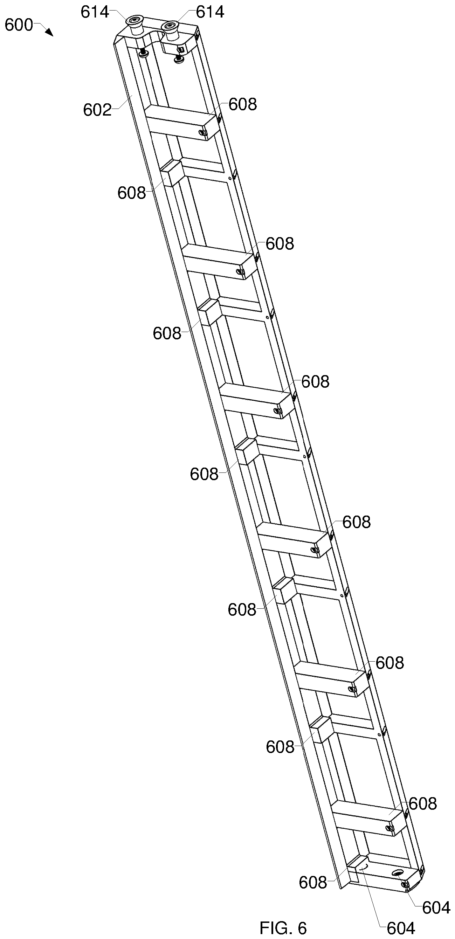

FIG. 6 illustrates an example fixture assembly 600 that may be used to implement the multi-rotational fixture 103 of FIG. 1. For example, the fixture assembly 600 may implement any of the fixture assemblies 304 of FIG. 3. The fixture assembly 600 includes a fixture frame 602, which provides a coupling to each of a rotation stage 306, 308 on a first end and a follower assembly 310 on a second end. For example, the fixture frame 602 includes slots 604 for coupling to the rotation stages 306, 308. The fixture frame 602 also includes connectors (e.g., hooks 614) for coupling to the follower assemblies 310, as discussed in more detail below.

The fixture frame 602 further includes supports 608, which may include one or more elements, and can be adapted to support a specific type of object to be inspected. The supports 608 rigidly hold a corresponding object to the fixture frame 602 to reduce or eliminate shifting or movement of the objects in the frame 602 during a radiography process. As the fixture frame 602 is rotated, the supports 608 likewise cause the mounted objects to be rotated. The supports 608 may be connected or affixed to the fixture frame 602 in any removable or permanent manner, such as via adjustable techniques such as set screws or permanent techniques such as chemical bonding or ultrasonic welding. In other examples, the supports 608 may be integral to the fixture frame 602, such as by molding the supports 608 and the frame 602 into a single fixture. The supports may include blocks, clips, slats, and/or any other passive or active support structure.

As described in more detail below, the example fixture assemblies 304 are easily (e.g., toollessly) inserted and removed from the multi-rotational fixture 103 to allow for mounting and removal of objects into the fixture assemblies 304.

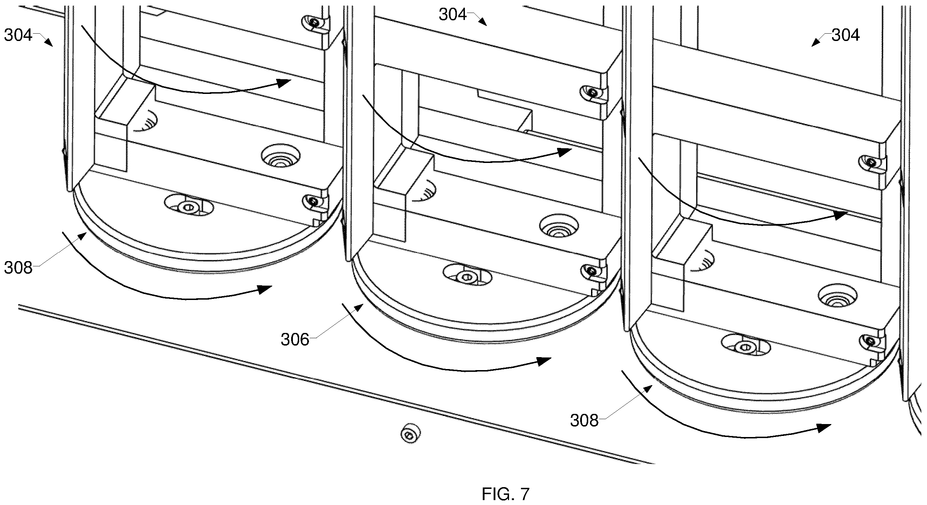

The fixture assemblies 304 are coupled to the rotation stages 306, 308 such that the rotation stages 306, 308 drive rotation of the fixture assemblies 304. FIG. 7 is a more detailed view of a bottom end of multiple fixture assemblies 304 coupled to corresponding rotation stages 306, 308 of the multi-rotational fixture 103 of FIG. 1. As illustrated in FIG. 7, the rotation stages 306, 308 align the fixture assemblies 304 and rotate each of the fixture assemblies 304 simultaneously. To apply rotational force to the fixture assemblies 304, the rotation stages 306, 308 include posts (or rods, dowels, etc.). The fixture assemblies 304 have corresponding slots or holes which are placed onto the posts. As the rotation stages 306, 308 are rotated, the posts rotate the fixture assemblies 304 in a direction as illustrated in FIG. 7.

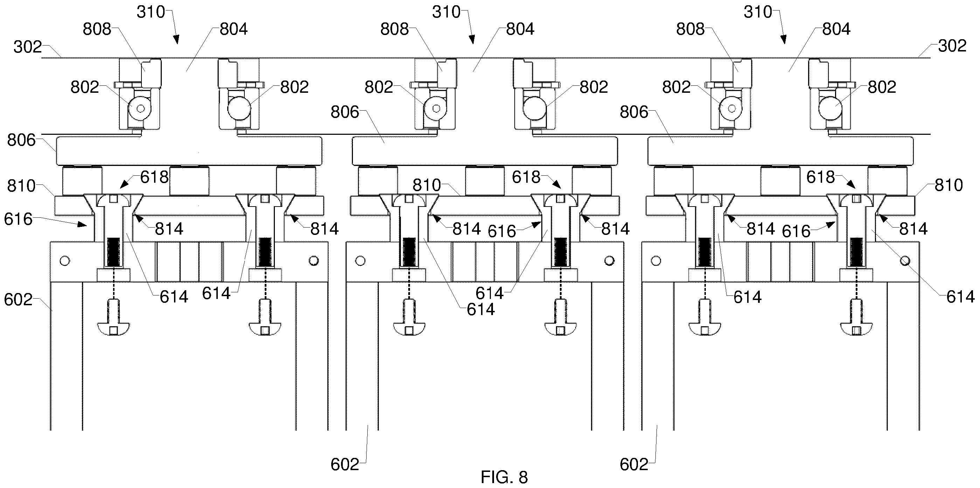

To provide support and stability over the length of the fixture assemblies 304, the fixture assemblies 304 are supported from the top end opposite the rotation stages 306, 308. FIG. 8 is a cross-sectional elevation view of a top end of multiple fixture assemblies 304 coupled to corresponding follower assemblies 310 of the multi-rotational fixture 103.

Each of the example follower assemblies 310 includes a bearing 802, which is coupled to the stage frame 302. For example, the bearing 802 may be mounted on a bolt 804 extending from a pedestal 806. The pedestal 806 is secured to the bearing 802 and the stage frame 302 via a lock nut 808 or other fastener. The bearing 802 allows low-friction rotation of the pedestal 806 with respect to the stage frame 302. The pedestal 806 and the bearing 802 have axes of rotation which are aligned with corresponding ones of the rotation stages 306, 308.

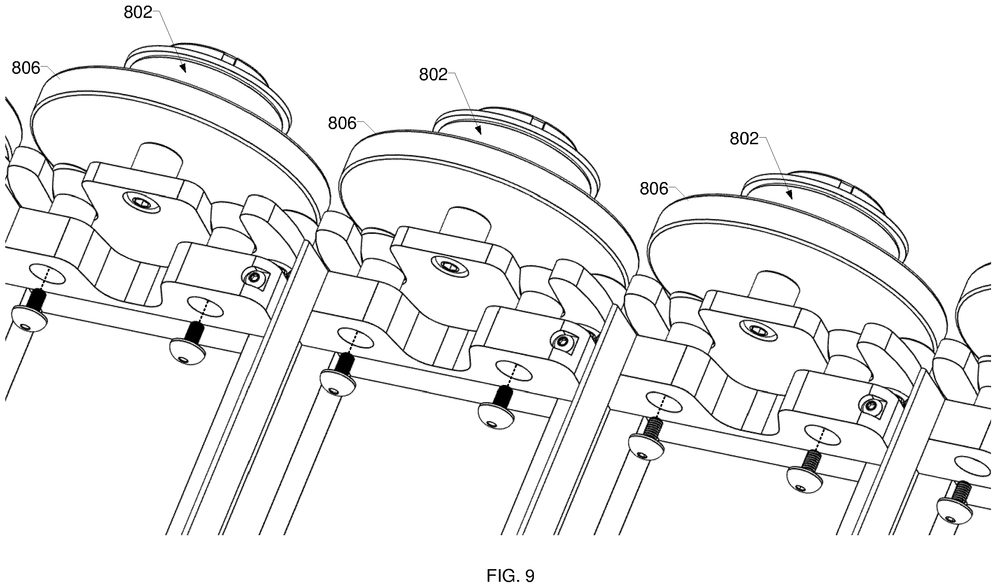

The pedestal 806 is coupled to a hanger 810, such as via one or more fasteners. The hanger 810 is spaced from the pedestal 806 to allow for insertion of the fixture assembly 304. To support the fixture assembly 304, the hanger 810 includes one or more seats 814, which hold corresponding hooks 614 of the fixture assembly 304. FIG. 9 is a perspective view of the top end of multiple rotational object fixtures coupled to the follower assemblies of FIG. 8. As illustrated in FIG. 9, the hangers 810 are open in a first direction to allow for insertion and removal of the hooks 614. When inserted, the hooks 614 may rest in the seat 814 of the hanger 810 for vertical support of the fixture assembly 304.

The example hooks 614 have a first portion 616 having a first diameter, and a second portion 618 having a second, larger diameter than the first portion 616. The first portion 616 may be inserted via the openings in the hanger 810, and the second portion 618 prevents unintended dislodgement of the hooks 614 from the seats 814. In the illustrated example, the second portion 618 may have a tapered or countersunk shape, which further improves the seating of the hooks 614 in the seats 814.

After or simultaneously with seating of the hooks 614 into the seats 8124, the lower end of the fixture assembly 304 is seated onto the opposing one of the rotation stage 306, 308. The hanger 810, the hooks 614, the posts of the rotation stage 306, 308, and the slots 604 of the fixture assembly 304 are dimensioned such that the fixture assembly 304 remains connected to the stage frame 302 while in a vertical configuration, in the absence of an external lifting force (e.g., by a test operator lifting the fixture assembly 304 for intentional removal from the stage frame 302).

The hangers 810 provide vertical support to the fixture assemblies 304 while the fixture assemblies 304 are rotated by the rotation stages 306, 308. As the rotation stages 306, 308 rotate the fixture assemblies 304, the hooks 614 impart a rotational force on the hanger 810, which is able to rotate via the pedestal 806 and the bearing 802 to maintain the vertical support.

While the illustrated example shows the bearings 802 as supported by the stage frame 302, in other examples the fixture assemblies 304 may be provided with bearings which are coupled to a fixed support on the stage frame 302. As such, the fixture assemblies 304 are able to rotate the objects 102 attached to the fixture assemblies 304 about the bearings located on the fixture assemblies 304.

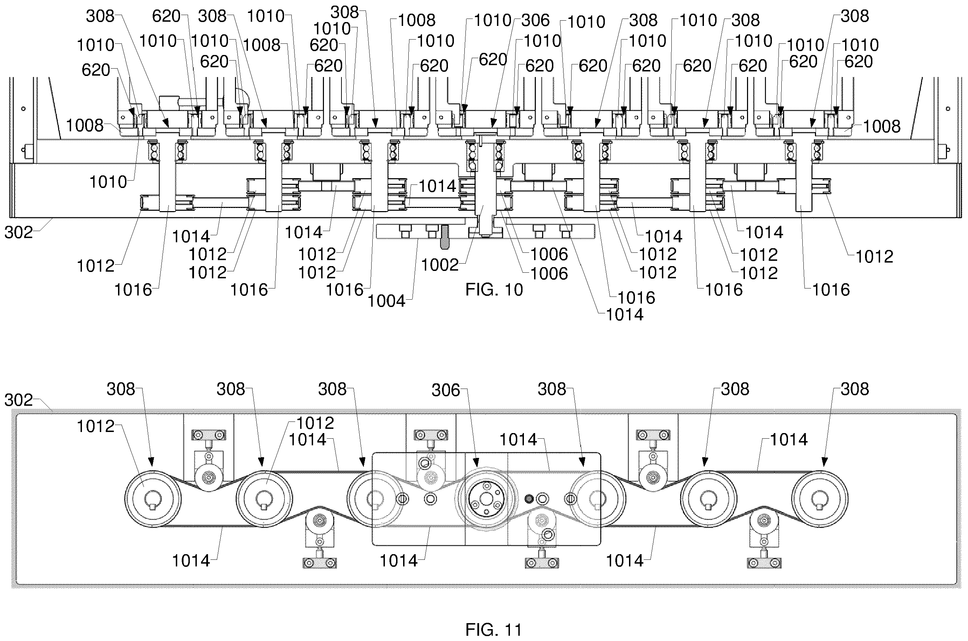

FIG. 10 is a cross-sectional elevation view of the example rotation stages 306, 308 of the multi-rotational fixture 103 of FIG. 1. FIG. 11 is a cross-sectional top plan view of the example rotation stages 306, 308 of the multi-rotational fixture 103 of FIG. 1.

The driving rotation stage 306 is located in the center of the set of rotation stages 306, 308, and is coupled to a transmission shaft 1002, which is connected to the motorized spindle 116. While the transmission shaft 1002 is coupled to the motorized spindle 116, the example stage frame 302 is coupled to one or more stationary or structural components of the radiography system 100 to prevent rotation of the entire multi-rotational fixture 103 by the motorized spindle 116. The multi-rotational fixture 103 may include one or more lower support pedestals 1004 to support the weight of the multi-rotational fixture 103 and the objects 102. The lower support pedestal 1004 may be supported by a non-rotating portion of the object positioner 110 and/or may be coupled to a rotating portion or the object positioner 110 (e.g., a platen) by bearings or other rotating couplings.

The transmission shaft 1002 is coupled to pulleys 1006 of the driving rotation stage 306 and to a transmission disc 1008, which includes posts 1010 for coupling to corresponding channels 620 of the fixture assemblies 304.

The pulleys 1006 are coupled to pulleys 1012 of the driven rotation stages 308 via timing belts 1014. The pulleys 1012 of the driven rotation stages 308 are coupled to corresponding transmission discs 1008 via corresponding drive shafts 1016. Each of the transmission discs 1008 are supported in the stage frame 302 by one or more sets of bearings 1018. The multi-rotational fixture 103 may include belt tensioners, teeth, and/or any other elements to control and/or adjust the movement of the rotation stages 306, 308.

As the transmission shaft 1002 is driven by the motorized spindle 116, the pulleys 1006 and timing belts 1014 induce the pulleys 1012 and drive shafts 1016 of the driven rotation stages 308 to also rotate. As a result, the actuation by the motorized spindle 116 causes the rotation stages 306, 308 to rotate the fixture assemblies 304 in synchrony.

While the examples discussed above show the rotation stages 306, 308 positioned below the fixture assemblies 304, in other examples the rotation stages 306, 308 may be implemented above the fixture assemblies 304 (e.g., to rotate the pedestals 806 and the hangers 810), while an alignment support is positioned below the fixture assemblies 304. In such examples, the driving rotation stage 306 may be driven by the motorized spindle 116 of FIG. 1 via gearing and/or belting, and/or may include a separate driving system to provide motive power to the driving rotation stage 306 (and, by extension, the driven rotation stages 308).

The present methods and/or systems may be realized in hardware, software, or a combination of hardware and software. The present methods and/or systems may be realized in a centralized fashion in at least one computing system, or in a distributed fashion where different elements are spread across several interconnected computing and/or remote computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more instructions (e.g., lines of code) executable by a machine, thereby causing the machine to perform processes as described herein.

As utilized herein, the terms "e.g.," and "for example" set off lists of one or more non-limiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, a control circuit may include digital and/or analog circuitry, discrete and/or integrated circuitry, microprocessors, DSPs, etc., software, hardware and/or firmware, located on one or more boards, that form part or all of a controller, and/or are used to control a radiography system to perform a radiography process.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory," "memory circuitry," and/or "memory device" means computer hardware or circuitry to store information for use by a processor and/or other digital device. The memory, memory circuitry, and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations.

While the present methods and/or systems have been described with reference to certain implementations, it will be understood by those skilled in the art that various changes may be made, and equivalents may be substituted without departing from the scope of the present method and/or system. For example, blocks and/or components of disclosed examples may be combined, divided, re-arranged, and/or otherwise modified. In addition, many modifications may be made to adapt a particular situation or material to the teachings of the present disclosure without departing from its scope. Therefore, the present methods and/or systems are not limited to the particular implementations disclosed. Instead, the present methods and/or systems will include all implementations falling within the scope of the appended claims, both literally and under the doctrine of equivalents.
Certain embodiments of the invention are described in the following clauses:
Clause 1. A multi-rotational fixture for a radiography system, the fixture comprising:
   a plurality of fixture assemblies, each of the fixture assemblies configured to hold a plurality of objects for inspection in a radiography system;
   a driving rotation stage;
   one or more driven rotation stages coupled to the driving rotation stage, such that rotation of the driving rotation stage causes the driven rotation stages to rotate simultaneously, wherein the driving rotation stage and the one or more driven rotation stages supports and simultaneously rotates a corresponding one of the fixture assemblies; and
   a plurality of follower assemblies configured to support the plurality of fixture assemblies on an opposite end of the fixture assemblies from the driving rotation stage and the driven rotation stages.
Clause 2. The multi-rotational fixture as defined in clause 1, wherein each of the plurality of fixture assemblies is configured to make a toolless connection to a corresponding one of the follower assemblies and a corresponding one of the rotation stages.
Clause 3. The multi-rotational fixture as defined in clause 1, wherein the driving rotation stage is coupled to a driving shaft configured to receive motive power from an external actuator.
Clause 4. The multi-rotational fixture as defined in clause 1, wherein each of the follower assemblies comprises a bearing and a seat coupled to the bearing, wherein each of the fixture assemblies is configured to couple to the seat for support by the bearing.
Clause 5. The multi-rotational fixture as defined in clause 4, wherein each of the fixture assemblies comprises a tapered connector configured to sit within the seat for support by the ball bearing.
Clause 6. The multi-rotational fixture as defined in clause 1, further comprising a stage frame, the follower assemblies and the rotation stages coupled to the stage frame.
Clause 7. The multi-rotational fixture as defined in clause 1, wherein each of the fixture assemblies comprises:
   a fixture frame configured to be removably coupled to one of the follower assemblies and one of the rotation stages; and
   a plurality of supports coupled to the fixture frame and configured to securely hold corresponding ones of the objects under inspection.
Clause 8. The multi-rotational fixture as defined in clause 7, wherein a capacity of the fixture is a product of the number of rotation stages and a number of the plurality of supports on each of the fixture assemblies.
Clause 9. The multi-rotational fixture as defined in clause 1, wherein each of the follower assemblies has an axis of rotation that aligns with an axis of rotation of a corresponding one of the rotation stages.
Clause 10. A radiography system, comprising:
   a radiation detector;
   a radiation emitter configured to direct radiation toward the radiation detector;
   an object positioner; and
   a multi-rotational fixture coupled to the object positioner, the fixture comprising:
      a plurality of fixture assemblies, each of the fixture assemblies configured to hold a plurality of objects for inspection in a radiography system;
      a driving rotation stage coupled to the object positioner;
      one or more driven rotation stages coupled to the driving rotation stage, such that rotation of the driving rotation stage causes the driven rotation stages to rotate simultaneously, wherein the driving rotation stage and the one or more driven rotation stages supports and simultaneously rotates a corresponding one of the fixture assemblies; and
      a plurality of follower assemblies configured to support the plurality of fixture assemblies on an opposite end of the fixture assemblies from the driving rotation stage and the driven rotation stages.
Clause 11. The radiography system as defined in clause 10, further comprising control circuitry configured to:
   control the object positioner to rotate the fixture assemblies to rotate the plurality of objects for inspection;
   control the radiation emitter to emit the radiation toward the radiation detector; and
   assemble three-dimensional scans of the plurality of objects based on images captured by respective portions of the radiation detector.
Clause 12. The radiography system as defined in clause 10, wherein each of the plurality of fixture assemblies is configured to make a toolless connection to a corresponding one of the follower assemblies and a corresponding one of the rotation stages.
Clause 13. The radiography system as defined in clause 10, wherein the driving rotation stage is coupled to a driving shaft configured to receive motive power from an external actuator.
Clause 14. The radiography system as defined in clause 10, wherein each of the follower assemblies comprises a bearing and a seat coupled to the bearing, wherein each of the fixture assemblies is configured to couple to the seat for support by the bearing.
Clause 15. The radiography system as defined in clause 14, wherein each of the fixture assemblies comprises a tapered connector configured to sit within the seat for support by the ball bearing.
Clause 16. The radiography system as defined in clause 10, further comprising a stage frame, the follower assemblies and the rotation stages coupled to the stage frame.
Clause 17. The radiography system as defined in clause 10, wherein each of the fixture assemblies comprises:
   a fixture frame configured to be removably coupled to one of the follower assemblies and one of the rotation stages; and
   a plurality of supports coupled to the fixture frame and configured to securely hold corresponding ones of the objects under inspection.
Clause 18. The radiography system as defined in clause 17, wherein a capacity of the fixture is a product of the number of rotation stages and a number of the plurality of supports on each of the fixture assemblies.
Clause 19. The radiography system as defined in clause 10, wherein each of the follower assemblies has an axis of rotation that aligns with an axis of rotation of a corresponding one of the rotation stages.

## Claims

1. A multi-rotational fixture for a radiography system, the fixture comprising:
a plurality of fixture assemblies, each of the fixture assemblies configured to hold a plurality of objects for inspection in a radiography system;
a driving rotation stage;
one or more driven rotation stages coupled to the driving rotation stage, such that rotation of the driving rotation stage causes the driven rotation stages to rotate simultaneously, wherein the driving rotation stage and the one or more driven rotation stages supports and simultaneously rotates a corresponding one of the fixture assemblies; and
a plurality of follower assemblies configured to support the plurality of fixture assemblies on an opposite end of the fixture assemblies from the driving rotation stage and the driven rotation stages.

2. The multi-rotational fixture as defined in claim 1, wherein each of the plurality of fixture assemblies is configured to make a toolless connection to a corresponding one of the follower assemblies and a corresponding one of the rotation stages, or
wherein the driving rotation stage is coupled to a driving shaft configured to receive motive power from an external actuator.

3. The multi-rotational fixture as defined in claim 1, wherein each of the follower assemblies comprises a bearing and a seat coupled to the bearing, wherein each of the fixture assemblies is configured to couple to the seat for support by the bearing, and optionally
wherein each of the fixture assemblies comprises a tapered connector configured to sit within the seat for support by the ball bearing.

4. The multi-rotational fixture as defined in claim 1, further comprising a stage frame, the follower assemblies and the rotation stages coupled to the stage frame.

5. The multi-rotational fixture as defined in claim 1, wherein each of the fixture assemblies comprises:
a fixture frame configured to be removably coupled to one of the follower assemblies and one of the rotation stages; and
a plurality of supports coupled to the fixture frame and configured to securely hold corresponding ones of the objects under inspection.

6. The multi-rotational fixture as defined in claim 5, wherein a capacity of the fixture is a product of the number of rotation stages and a number of the plurality of supports on each of the fixture assemblies.

7. The multi-rotational fixture as defined in claim 1, wherein each of the follower assemblies has an axis of rotation that aligns with an axis of rotation of a corresponding one of the rotation stages.

8. A radiography system, comprising:
a radiation detector;
a radiation emitter configured to direct radiation toward the radiation detector;
an object positioner; and
a multi-rotational fixture coupled to the object positioner, the fixture comprising:
a plurality of fixture assemblies, each of the fixture assemblies configured to hold a plurality of objects for inspection in a radiography system;
a driving rotation stage coupled to the object positioner;
one or more driven rotation stages coupled to the driving rotation stage, such that rotation of the driving rotation stage causes the driven rotation stages to rotate simultaneously, wherein the driving rotation stage and the one or more driven rotation stages supports and simultaneously rotates a corresponding one of the fixture assemblies; and
a plurality of follower assemblies configured to support the plurality of fixture assemblies on an opposite end of the fixture assemblies from the driving rotation stage and the driven rotation stages.

9. The radiography system as defined in claim 8, further comprising control circuitry configured to:
control the object positioner to rotate the fixture assemblies to rotate the plurality of objects for inspection;
control the radiation emitter to emit the radiation toward the radiation detector; and
assemble three-dimensional scans of the plurality of objects based on images captured by respective portions of the radiation detector.

10. The radiography system as defined in claim 8, wherein each of the plurality of fixture assemblies is configured to make a toolless connection to a corresponding one of the follower assemblies and a corresponding one of the rotation stages, or
wherein the driving rotation stage is coupled to a driving shaft configured to receive motive power from an external actuator.

11. The radiography system as defined in claim 8, wherein each of the follower assemblies comprises a bearing and a seat coupled to the bearing, wherein each of the fixture assemblies is configured to couple to the seat for support by the bearing, and optionally
wherein each of the fixture assemblies comprises a tapered connector configured to sit within the seat for support by the ball bearing.

12. The radiography system as defined in claim 8, further comprising a stage frame, the follower assemblies and the rotation stages coupled to the stage frame.

13. The radiography system as defined in claim 8, wherein each of the fixture assemblies comprises:
a fixture frame configured to be removably coupled to one of the follower assemblies and one of the rotation stages; and
a plurality of supports coupled to the fixture frame and configured to securely hold corresponding ones of the objects under inspection.

14. The radiography system as defined in claim 13, wherein a capacity of the fixture is a product of the number of rotation stages and a number of the plurality of supports on each of the fixture assemblies.

15. The radiography system as defined in claim 8, wherein each of the follower assemblies has an axis of rotation that aligns with an axis of rotation of a corresponding one of the rotation stages.
